# EUROPEAN PATENT SPECIFICATION

(11) **EP 3 086 424 B1**
(45) Date of publication and mention of the grant of the patent: **14.11.2018**
(21) Application number: 15164256.8
(22) Date of filing: 20.04.2015
(51) Int. Cl.: H02G 1/10

(54) **METHOD FOR OFFSHORE INSTALLING OF POWER CABLES FOR WIND TURBINE INSTALLATIONS AND SEABED VEHICLE**
VERFAHREN ZUR OFFSHORE-INSTALLATION VON STROMKABELN FÜR WINDTURBINENINSTALLATIONEN UND MEERESBODENFAHRZEUG
PROCÉDÉ DE PAUSE EN PLEINE MER DE CÂBLES DE PUISSANCE POUR DES INSTALLATIONS DE TURBINE ÉOLIENNE ET VÉHICULE DE FOND MARIN

(43) Date of publication of application: 26.10.2016
(73) Proprietor: Siemens Aktiengesellschaft, 80333 München (DE)
(72) Inventor: Soerensen, Johnny, 6920 Videbæk (DK)

(56) References cited:
- GB-A- 2 364 358
- GB-A- 2 423 778
- JP-A- 2002 171 655
- JP-A- 2013 038 940
- JP-A- 2015 038 841

## Description

The present invention relates to a method for offshore installing of power cables for wind turbine installations and to a seabed vehicle.

Conventionally, power cabling in offshore wind turbine installations is performed by connecting neighboring offshore positions, i.e. wind turbine and/or substation, section by section.

Each section between neighboring offshore positions is electrically interconnected by trenching the seabed between those positions and laying a power cable into the trench, the power cable being lowered from a sea level where a supply of reeled-up power cable is provided by a support vessel.

During the process of lowering the power cable from sea level, the power cable experiences substantial strain due to its own weight. Therefore, conventional power cables comprise an armoring layer which encloses the power cable. This armoring layer adds additional weight, however. The armoring layer also protects the power cable when installed in the sea bed.

The power cable is either buried in the seabed by a trenching vehicle employing a plowing technique or a water jetting technique.

US4896998 discloses a plough for burying cable below the seabed by means to vary the length of the path of a cable extending through the plough, which means is responsive to changes in tension in the cable.

JP58065824A describes a water jetting technique, where a number of nozzles is used in the excavation of a trench by a high-pressure water jet by a method in which plural high-pressure water nozzles are arranged in one row and wedging plates to disintegrate an excavated trench are arranged in the rear side of the nozzle row.
Other solutions deploy two-step approaches, where in a first trenching step a seabed vehicle is equipped with a plow for trenching in the seabed and laying the power cable in the trench. In a second backfilling step a second vehicle is employed for burying the cable in the seabed.
These approaches are time consuming and therefore slow down the installation. Furthermore, damage of the cable accounts for 90% of the downtime in offshore cable installation.
So far no solution has been provided wherein the plough is embedded in the seabed during the whole installation process, while at the same time being able to install the cable in or above the seabed.

JP 2015 038 841 A describes an inside-water-and-subaqueous cable for constructing an electric power supply line.
JP 2002 171 655 A describes a submarine cable protecting pipe.
JP 2013 038 940 A describes a terminal structure of underwater cable.
It is one object of the present invention to provide an improved method for offshore installing of power cables for wind turbine installations.
According to a first aspect, a method for offshore installing of power cables for wind turbine installations according to claim 1 is proposed.

Advantageously, the method replaces laying of power cables including heavy armoring by laying of empty tubes, into which power cables (without heavy armoring) are inserted at a later stage, thus simplifying power cabling and the underlying logistics. Preferably, the installation of the empty tube is done in a continuous installation.

In particular, installing empty tubes in the seabed, i.e. under the sea floor, is preferred for reasons of protection against drag nets, anchors and the like.
"Offshore" does not only include marine environments but also lakes and other open waters.
One example of an offshore position, where electricity is to be generated, is a wind turbine. One example of an offshore position, where electricity is converted, is a substation comprising one or more transformers.
"Wind turbine installations" are also known as wind farms.
Wind turbines are wind-driven power generators.
Offshore position refers to a location of the wind turbine foundation (monopile, gravity, tripods etc.) or housing meaning wind turbine tower, transition piece or substation.
Empty tubes are long and flexible pipes. For example, the empty tubes may have a flexibility which allows them to be wound up on a reel or drum. The empty tubes are used to guide the power cables inserted into them. In particular, the empty tubes and the power cables are installed at separate points in time, i.e. the empty tubes are installed first, and, second, the power cables are inserted into them.

According to the invention, a trench is formed in the seabed and at least one empty tube is laid in and/or above the trench.
Advantageously, process time may be saved by trenching the seabed and simultaneously laying at least one empty tube in a continuous operation. As described above, intermittently two empty tubes are laid in the trench to create the overlap.

Preferably, a continuous installation is done, thereby saving time and money by not deploying and launching the plow in every single cable installation.
A trench is a long, narrow groove in the ground or in a seabed in particular. For example, a trench may be formed by plowing or water jetting, cutting, lifting, and turning over soil such that it comes to rest outside the trench. One continuous trench may connect all installations (wind turbines and substation).

According to the invention, the at least one empty tube is cut at or near the offshore positions.
Advantageously, cutting empty tubes on-site at offshore positions simplifies logistics and stock-keeping by providing reeled-up continuous empty tubes on reels.
According to a further embodiment, the at least one empty tube is made of plastic, preferably thermoplastics, more preferably polyethylene, even more preferable high-density polyethylene.
Advantageously, empty plastic tubes are lightweight and may be easily lowered from a vessel at sea level or from a seabed vehicle.
Preferably, the plastic has a material density of 90 to 110% of the material density of water.
Advantageously, a plastic material with a weight similar to the one of water eliminates the need of laying a power cable enclosed by a strain relief such as an armoring layer.
Advantageously, high-density polyethylene (HDPE), which is a polyethylene (PE) variant defined by a material density in a range of 0.94-0.97 g/cm³, has sufficient stiffness and chemical resistance, which is important in rough marine environments.

According to a further embodiment, additional length of tube is provided at the offshore positions.

Advantageously, providing additional length of tubes on-site at offshore positions enables installation of a single continuing tube, the installation vessel would either slow down in speed or the feeding speed of tube would be increased. A second installation vessel would cut the tube at the offshore position and would be able to insert the power cable into the open end of the empty tube.

According to a further embodiment, a trench is formed in the seabed and, the at least one empty tube is laid in the trench and one empty tube is laid above the seabed.

Preferably, a continuous installation is done, thereby saving time and money by not deploying and launching the plow in every single cable installation.

According to a further embodiment, at least two of the empty tubes overlap in the planned installation path, e.g. common longitudinal direction, at the offshore positions.

The overlap has the purpose of generating an excess portion of empty tubing for guiding the power cable into a foundation or housing, typically upwards from the seabed. Excess portions of empty tubes are directly adjacent and parallel to each other. The excess portions may be 5, 20, 30 or more meters in length, for example.

According to a further embodiment, the overlap is provided by use of a seabed vehicle or a vessel moving continuously along the planned installation path, by
i) installing a first empty tube during a first period of time,
ii) installing a second empty tube simultaneously with the first empty tube during a second period of time, and
iii) stopping installing the first empty tube and continue installing the second tube during a third period of time.

A common longitudinal direction of the overlapping empty tubes corresponds to the direction in which a vehicle or vessel moves during its operation of installing (laying) the pipes upon passing said offshore positions.

According to a further embodiment, the trench in the seabed is backfilled after the at least one empty tube is laid in the trench.

Advantageously, even more process time may be saved by backfilling the soil removed from the trench after the at least one empty tube has been laid into the trench. In particular, this step may take place simultaneously with the above-mentioned continuous trenching and laying operation.

According to a further embodiment, the empty tubes are supplied from at least two supplies.

Advantageously, providing multiple supplies of empty tubes enables the simultaneous laying (step ii) above) of multiple empty pipes such that the afore-mentioned overlap of the empty tubes is obtained.

According to a further embodiment, the at least two supplies are reels with the empty tubes reeled-up thereon.

In particular, the at least two supplies may be provided on a sea-level support vessel or on a seabed vehicle, respectively. Reels are also termed drums.

According to the invention, the power cables are inserted into the empty tubes after installing the empty tubes in or above the seabed.
In particular, a corresponding power cable is installed, i.e. inserted into the corresponding tube, after previously installing the corresponding empty tube between neighboring offshore positions. A corresponding power cable may be inserted into a corresponding tube by pushing the power cable into the empty tube through one end and/or opening thereof.
A corresponding power cable may be supplied at sea level and lowered vertically down to a corresponding empty tube for insertion. Or, a corresponding power cable may be provided at the level of the seabed for insertion into a corresponding empty tube. Even further, a corresponding power cable may be inserted from within a housing or foundation into which a corresponding empty tube reaches. For example, a cable reel may be lowered down to the seabed or into the housing or foundation for insertion of the corresponding power cable into a corresponding empty tube.
"In" the seabed is to say that the empty tubes are buried in the seabed, for example, by first digging a trench, laying the empty tubes in the trench and covering the trench. Or, the empty tubes are laid on the sea floor and then covered with soil, for example by soil provided by water jetting into the sea floor next to a corresponding (laid) empty tube. "Above" the seabed is to say that the empty tubes are not covered by the seabed. The empty tubes may be attached to the sea floor by suitable attachment means.
According to a further embodiment, one end of a corresponding empty tube is installed in a foundation or housing at an offshore position.
A foundation is a stable structure made of steel or concrete that supports a structure above from underneath (e.g. monopile, gravity, tripods etc.). A wind turbine tower may be supported on top of a foundation in the seabed. For example, a monopile is a single large pile which is driven or drilled into the sea bed. Grouting is used to connect the transition piece to the monopile. A transition piece is used as a levelling mechanism in order to ensure the required verticality of the foundation for the wind turbine tower.

A housing is an enclosure that covers or protects what is inside. In the context of offshore wind turbine installations, a housing may particularly denote a wind turbine tower, transition piece or substation.

According to a further embodiment, a corresponding offshore power cable is inserted into the one end of the corresponding empty tube at the foundation or housing.

After installing the empty tubes in or above the seabed and installing their respective ends in offshore positions, the power cables are inserted from one or the other end of respective empty tubes, which are accessible from within the foundation or housing of said offshore positions.

Any embodiment of the first aspect may be combined with any embodiment of the first aspect to obtain another embodiment of the first aspect.

According to a second aspect, a seabed vehicle with level adjustment for performing at least one step of the method according to the first aspect is proposed. The vehicle comprises legs with actuation means, a main frame onto which the legs are pivotably connected, hydraulic or electrical means for pivoting the legs relative to the main frame, a plow for forming a trench in the seabed, the plow being fixed to the main frame, and at least one tube handler for handling a respective empty tube to be adjusted vertically, so that the respective empty tube is either positioned in the trench or above the seabed.

Further embodiments, features and advantages of the present invention will become apparent from the subsequent description and dependent claims, taken in conjunction with the accompanying drawings, in which:
Fig. 1 shows a side view of an offshore wind turbine installation;
Fig. 2 shows a perspective view of a single-core power cable protruding from an empty tube;
Fig. 3 shows a side view of a string of offshore positions with empty tubes laid in between;
Fig. 4 shows a side view of the string of offshore positions from Fig. 3 with the empty tubes installed at the offshore positions;
Fig. 5 shows a side view of an embodiment of a seabed vehicle placed on the seabed in an upper vertical position;
Fig. 6 shows a side view of the embodiment of the seabed vehicle in a lower vertical position in which the plow trenches the seabed;
Fig. 7 shows a side view of the embodiment of the seabed vehicle in an initial position for trenching the seabed;
Fig. 8 shows a side view of the embodiment of the seabed vehicle in a trenching position in which a first empty tube is laid in the trench;
Fig. 9 shows a side view of the embodiment of the seabed vehicle in a trenching position in which a second empty tube is laid in the trench simultaneously with the first empty tube;
Fig. 10 shows a side view of the embodiment of the seabed vehicle in a trenching position in which laying of the second empty tube continues and laying of the first empty tube is stopped;
Fig. 11 shows a trenching progress according to a conventional method for installing offshore power cables;
Fig. 12 shows a trenching progress according to the proposed method for installing offshore power cables;
Fig. 13 shows a detailed sectional view of the foundation of a wind turbine; and
Fig. 14 shows a flow diagram of the proposed method for installing offshore power cables.

In the figures, like reference numerals designate like or functionally equivalent elements, unless otherwise indicated.

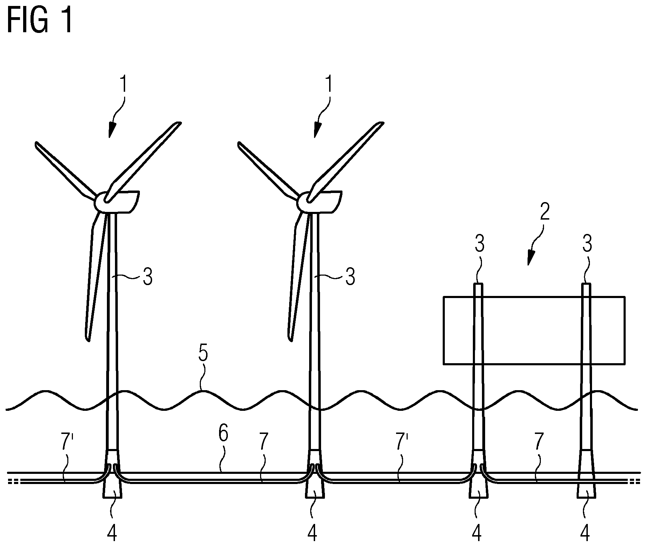

Fig. 1 shows a side view of an offshore wind turbine installation typically comprising 10, 50 or more wind turbines and one or more substations (converter stations). Fig. 1 shows - for reasons of simplification - only two wind turbines 1 and a converter station 2.

In particular, both the wind turbines 1 and the converter station 2 rest on towers 3 which are supported by foundations 4 in the seabed 6 and protrude above sea level 5. Below the seabed 6, empty tubes 7, 7' are shown which connect the wind turbines 1 and converter station 2.

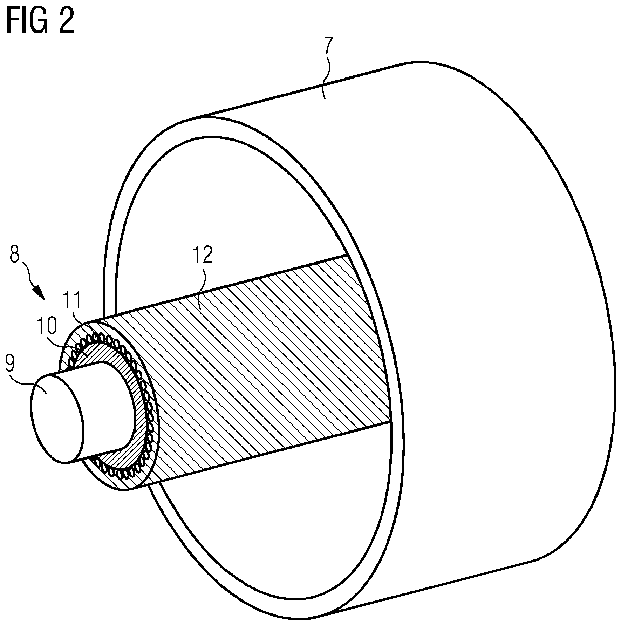

Fig. 2 shows a perspective view of a single-core power cable 8 protruding from an empty tube 7, 7'.

From inside to outside, the basic configuration of a single-core power cable 8 may be a single conducting core 9 enclosed by an insulator 10, a shielding braid 11 and a cladding 12.

In particular, direct current (DC) power transmission requires one such power cable 8, whereas in transmission of three-phase alternating current (AC) power, one such power cable 8 is needed per phase. It should be noted that the power cable 8 depicted in Fig. 2 has no armoring layer. One or more power cables 8 may be inserted into each empty tube 7, 7' (Fig. 1).

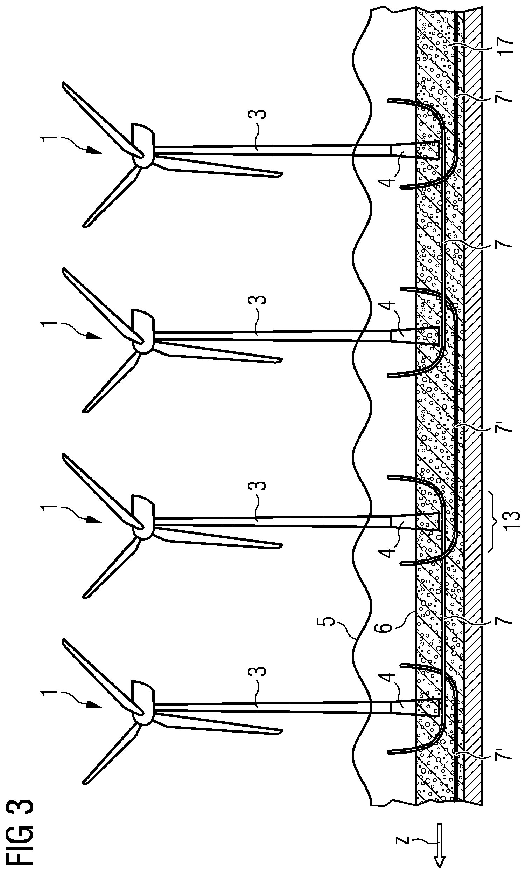

Fig. 3 shows a side view of a string of offshore positions with empty tubes 7, 7' laid in between.

At these offshore positions, wind turbines 1 are placed.

The string of such offshore positions is lined up in a direction z along a planned installation path connecting all offshore positions. The path may be straight and/or wound.

At their respective ends, additional length of empty tubes 7, 7' is provided so that two consecutive empty tubes 7, 7' overlap with each other and also with the respective offshore position. This overlap 13 allows for the empty tubes 7, 7' to be fitted according to the installation situation found at a respective offshore position.

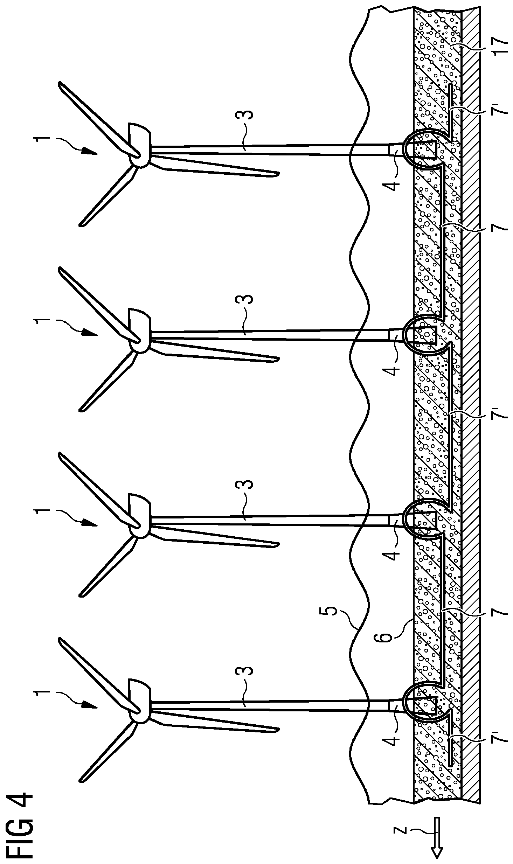

Fig. 4 shows a side view of the string of offshore positions from Fig. 3 with the empty tubes 7, 7' installed at the offshore positions.

In particular, the additional length of empty tubes 7, 7' is fed by feeding means, e.g. roller conveyors mounted on the seabed vehicle, and a cutting means is provided after the feeding means.

Preferably, empty tubes 7, 7' are cut after additional length has been provided, threaded through appropriate openings in a respective foundation 4 or housing (not shown), and fixed inside thereof.

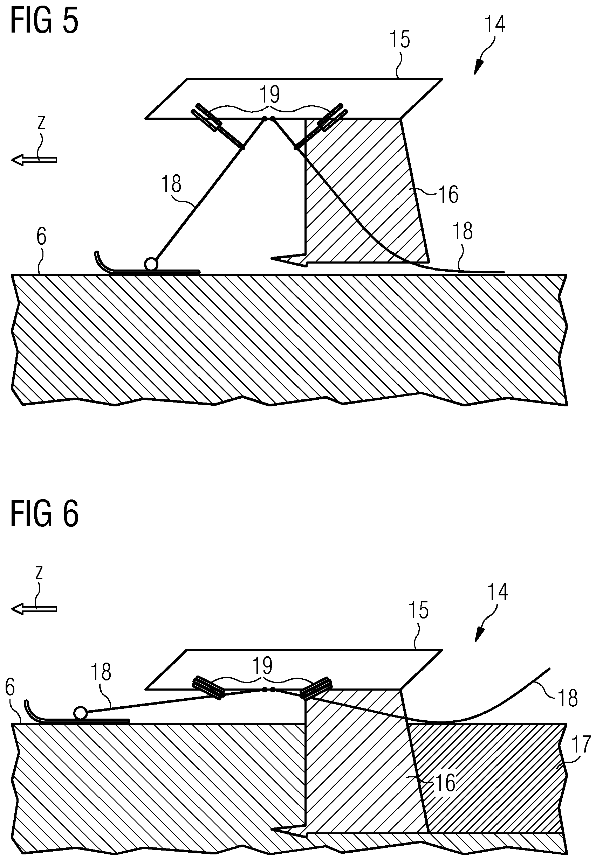

Fig. 5 shows a side view of an embodiment of a seabed vehicle 14 placed on the seabed 6 in an upper vertical position.

The vehicle 14 comprises a main frame 15, a plow 16 adapted to form a trench 17 into the seabed 6, the plow 16 being fixed to the main frame 15, and legs 18 with actuation means 19, the legs 18 being pivotably connected to the main frame 15.

Preferably, hydraulic or electrical actuation means 19 are deployed. In particular, the actuation means 19 are configured to change the vertical position of the main frame 15 of the vehicle 14 toward the seabed 6.

The plow 16 may vary in structural geometry, for example being V-shaped in cross-section, where the soil is turned over and a backfill plow is used to return the soil into the trench 17. Alternatively, the geometry could be blade-shaped, whereby no backfill plow is needed as no soil is turned to the side.

Fig. 6 shows a side view of the embodiment of the seabed vehicle 14 in a lower vertical position in which the plow 16 trenches the seabed 6.

The lowered vehicle 14 may be pulled by, for example, a support vessel. Accordingly, the plow 16 opens the trench 17 in a continuous operation.

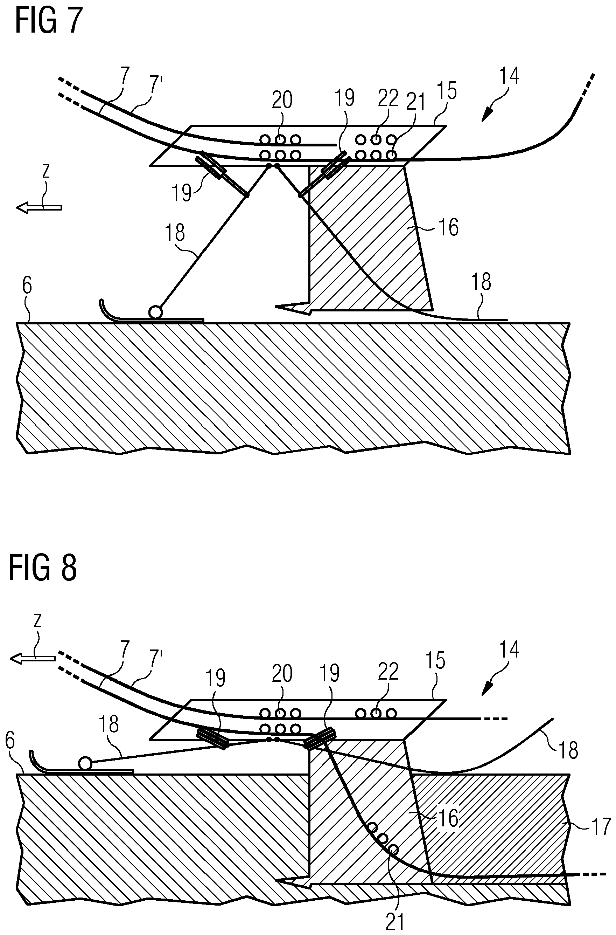

Fig. 7 shows a side view of the embodiment of the seabed vehicle 14 in an initial configuration for trenching the seabed 6.

The seabed vehicle 14 assumes its upper vertical position. It includes tube handlers 20 for feeding and guiding empty tubes 7, 7' into and within the vehicle 14. It is furthermore fitted with tube handlers 21, 22 configured to position the respective empty tube 7, 7' at different vertical levels relative to the seabed 6 during trenching. In other words, each of the tube handlers 21, 22 may feed and guide an empty tube 7, 7' into the trench 17 or onto the seabed 6 independently of one other. The tube handlers 21, 22 preferably include the cutting means. In particular, tube handlers 21, 22 are fitted into an interior space of the plow 16 enabling protecting the empty tube during the trenching process.

Particularly, the empty tubes 7, 7' are provided reeled-up continuously on reels. The reels would either be fitted on the seabed vehicle 14 or on a support vessel.

Fig. 7 further depicts the empty tube 7 extending through the vehicle 14 via tube handlers 20 and 21, its rear end floating towards the sea level 5. At the same time, tube handler 20 keeps a second empty tube 7' in a standby position.

This is an initial configuration of the seabed vehicle 14 when being provided in front of a first of a string of offshore positions along which the empty tubes 7, 7' are to be laid.

Fig. 8 shows a side view of the embodiment of the seabed vehicle 14 in a trenching position in which a first empty tube 7 is laid in the trench 17.

The seabed vehicle 14 assumes this configuration after being lowered into its lower vertical position by use of the actuation means 19. In this configuration, the plow 16 penetrates the seabed 6. When being pulled by, for example, a support vessel, the plow 16 forms a continuous trench 17 in the seabed 6.

Fig. 8 shows that tube handler 21 has been lowered so that the first empty tube 7 is fed, guided and laid into the formed trench 17. At the same time, a second empty tube 7' is kept in a standby position.

In this configuration, the seabed vehicle 14 is pulled past the first of the string of offshore positions along which the empty tubes 7, 7' are to be laid, until a second of the string of offshore positions is approached. In other words, in between consecutive offshore positions, only a single empty tube 7, 7' is laid.

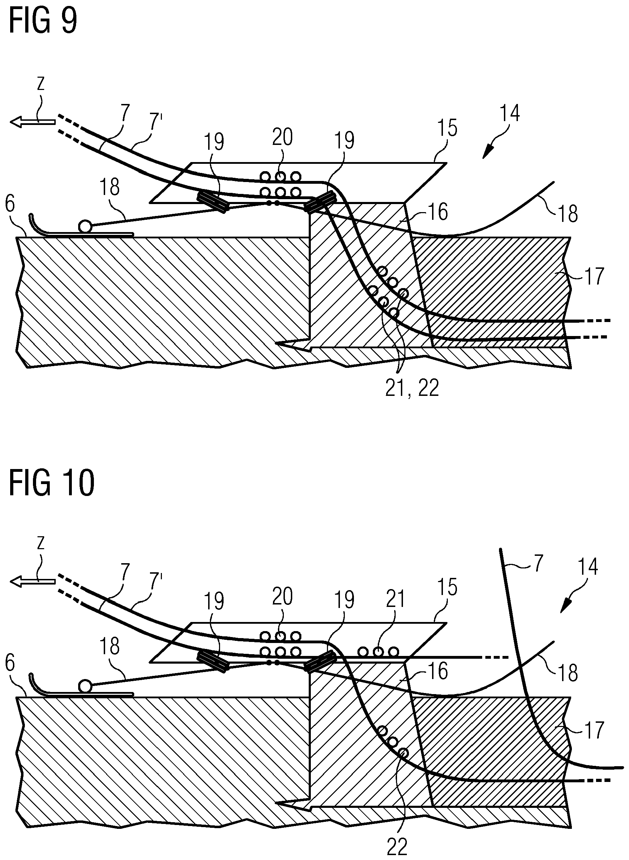

Fig. 9 shows a side view of the embodiment of the seabed vehicle 14 in a trenching position in which a second empty tube 7' is laid in the trench 17 simultaneously with the first empty tube 7.

With respect to Fig. 8, tube handler 22 has been lowered into the trench 17, too, so that also the second empty tube 7' is fed, guided and laid into the formed trench 17 simultaneously with the first empty tube 7.

In this configuration, the seabed vehicle 14 is pulled beyond the second of a string of offshore positions along which the empty tubes 7, 7' are to be laid. In other words, every time the seabed vehicle 14 passes an offshore position, both empty tubes 7, 7' are laid, except for the very first and very last of the string of offshore positions along which the empty tubes 7, 7' are to be laid.

Fig. 10 shows a side view of the embodiment of the seabed vehicle 14 in a trenching position in which laying of the second empty tube 7' continues and laying of the first empty tube 7 is stopped.

With respect to Fig. 7, tube handler 21 has been raised in its upper position so that the first empty tube 7 is guided out of the trench 17. After providing extra length of empty tube 7, the first empty tube 7 is cut by means of cutting means. As a result, a corresponding end of the laid part of the first empty tube 7 floats toward the sea level 5, while the other part of the first empty tube 7 remaining on the seabed vehicle 14 assumes a standby position.

The seabed vehicle 14 has this configuration after having been pulled beyond the second of a string of offshore positions along which the empty tubes 7, 7' are to be laid. In other words, every time the seabed vehicle 14 has passed an offshore position where both empty tubes 7, 7' are laid, one of the empty tubes 7, 7' is guided out of the trench 17 and cut, while laying of the respective other one of the empty tubes 7, 7' is resumed.

The configuration of the seabed vehicle 14 is identical to the configuration of Fig. 8, except for a permutation of the first empty tube 7 and the second empty tube 7'. Therefore, laying of empty tubes 7, 7' may be continued without stopping or backing off the seabed vehicle 14.

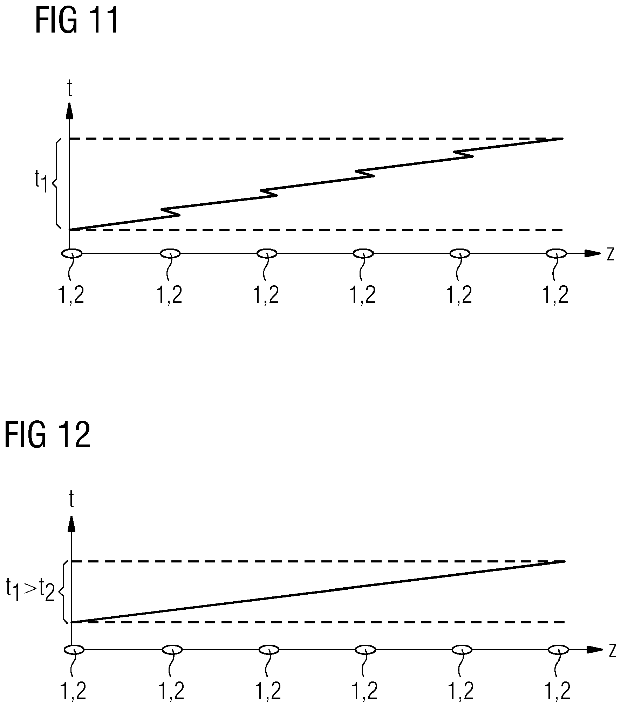

Fig. 11 shows a trenching progress according to a conventional method for installing power cables 8. Therein, Fig. 11 illustrates a travel distance z vs. a travel time t of a vessel being pulled at sea level in the z-direction and supplying an armored power cable to the sea bed 6.

Whenever the vessel passes an offshore position (a wind turbine 1 or converter station 2), laying of a first portion of power cable 8 is completed, the power cable 8 is cut, the vessel is backed-off, and laying of a second portion of power cable 8 is started. As a result, the laying process may take a time *t₁*.

Fig. 12 shows a trenching progress according to an embodiment of the proposed method for installing power cables 8. Therein, Fig. 12 illustrates a travel distance *z* vs. a travel time t of the vehicle 14 of Figs. 6 to 10 traveling in the z-direction and laying empty tubes 7, 7' as explained above.

In contrast to the conventional approach, the vehicle 14 of Figs. 6 to 10 supplies up to two empty tubes 7, 7' at a time, and the duration of the laying process is reduced to a time *t2* < *t₁* since backing-off of the vehicle 14 is avoided.

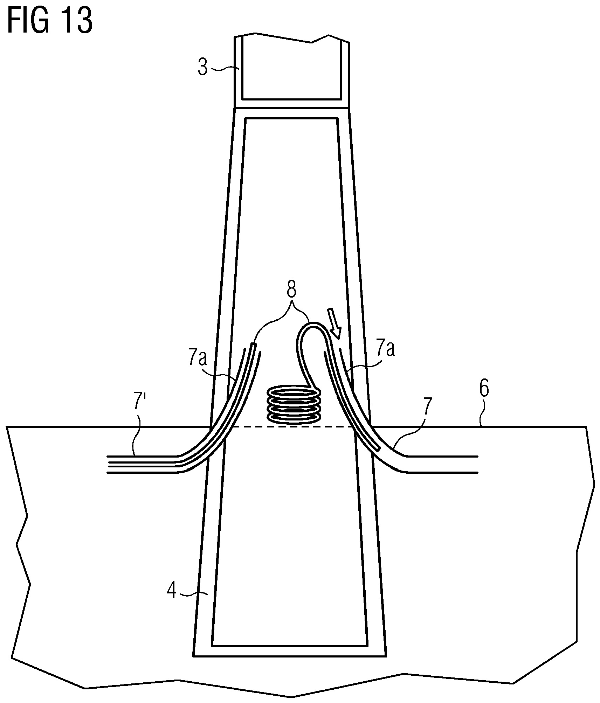

Fig. 13 shows a detailed sectional view of the foundation 4 of a wind turbine 1.

The respective ends 7a of the empty tubes 7, 7' terminating at the wind turbine 1 have been installed by guiding them through appropriate openings in the foundation 4, and fixing them inside thereof.

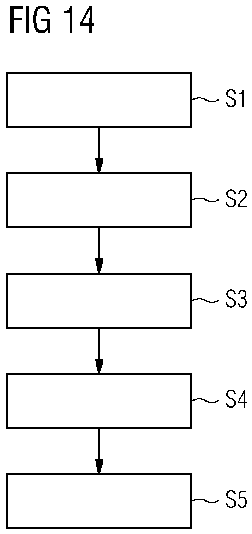

In this state, the method step S5 (see Fig. 14) may be performed, in which power cables 8 are inserted into the empty tubes 7, 7' after the empty tubes 7, 7' are installed in the seabed 6 and respective ends 7a of the empty tubes 7, 7' are installed in the foundation 4.

To this end, reeled-up power cable 8 may be transported to the wind turbine 1 by ship and lowered inside the tower 3 and/or foundation 4 to the open ends 7a of the empty tubes 7, 7'. The power cables 8 are then reeled off and pushed into the respective ends 7a of the installed empty tubes 7, 7'.

Fig. 14 shows a flow diagram of the proposed method for installing offshore power cables 8. The method comprises the following steps:
In a first step S1, a seabed vehicle 14 is provided at a first offshore position. Tube handlers 20, 21 employ feeding means to provide for additional length of empty tube 7, as shown in Fig. 7.
In a second step S2, the seabed vehicle 14 is lowered so that the plow 16 penetrates the seabed 6 by a fixed depth, and is towed along a planned installation path, thus forming a continuous trench 17 of fixed depth in the seabed 6 along the planned installation path. A first tube handler 21 is lowered vertically for guiding the empty tube 7 into the trench 17, as shown in Fig. 8. Tube handlers 20, 21 continue to employ feeding means for feeding the empty tube 7 into the trench 17 at a speed at which the seabed vehicle 14 is towed along the planned installation path.
In a third step S3, before passing a second offshore position,
   tube handlers 20, 22 employ feeding means to provide for additional length of empty tube 7', and a second tube handler 22 is lowered vertically for guiding the empty tube 7' into the trench 17, as shown in Fig. 9. Tube handlers 20, 21, 22 continue to employ feeding means for feeding the empty tubes 7, 7' into the trench 17 at a speed at which the seabed vehicle 14 is towed along the planned installation path.
In a fourth step S4, after passing the second offshore position and providing for additional length of empty tube 7, tube handler 21 is lifted vertically for guiding the empty tube 7 out of the trench 17, and employs cutting means to cut the empty tube 7 while continuing trenching as well as feeding the empty tube 7' into the trench as shown in Fig. 10.

The respective ends 7a of the empty tubes 7, 7' are subsequently installed at the offshore positions inside corresponding wind turbines 1 or converter stations 2.

In a fifth step S5, the power cables 8 are inserted into the empty tubes 7, 7'. For example, the power cables 8 are pushed and/or pulled into the respective ends 7a of the empty tubes 7, 7'.

## Claims

1. A method for offshore installing of power cables (8) for wind turbine installations,
- wherein the power cables (8) are installed by use of empty tubes (7, 7') between several offshore positions, e.g. between wind turbine foundations and/or a substation, wherein at least one empty tube (7, 7') is installed in or above a seabed (6);
- wherein a trench (17) is formed in the seabed (6) and, at least one empty tube (7, 7') is laid in or above the trench (17);
- wherein the at least one empty tube (7, 7') is cut at or near the offshore positions (1, 2); and
- wherein the power cables (8) are inserted into the empty tubes (7, 7') after installing the empty tubes (7, 7') in or above the seabed (6).

2. The method according to claim 1, wherein additional length of tube (7, 7') is provided at the offshore positions (1, 2).

3. The method according to claim 1 or 2, wherein a trench (17) is formed in the seabed (6) and, the at least one empty tube (7, 7') is laid in the trench (17) and one empty tube (7, 7') is laid above the seabed.

4. The method according to one of claims 1 to 3, wherein at least two of the empty tubes (7, 7') overlap in the planned installation path, e.g. common longitudinal direction (Z), at the offshore positions (1, 2).

5. The method according to claim 4, wherein the overlap is provided by use of a seabed vehicle or a vessel moving continuously along the planned installation path,
- i) installing a first empty tube during a first period of time,
- ii) installing a second empty tube simultaneously with the first empty tube during a second period of time, and
- iii) stopping installing the first empty tube and continue installing the second tube during a third period of time.

6. The method according to one of claims 1 to 5, wherein the trench (17) in the seabed (6) is backfilled after the at least one empty tube (7, 7') is laid in the trench (17).

7. The method according to one of claims 1 to 6, wherein the empty tubes (7, 7') are supplied from at least two supplies (18).

8. The method according to claim 7, wherein the at least two supplies (18) are reels with the empty tubes (7, 7') reeled up thereon.

9. The method according to one of claims 1 to 8, wherein one end (7a) of a corresponding empty tube (7, 7') is installed in a foundation (4) or housing (3) at an offshore position (1, 2)

10. The method according to claim 9, wherein a corresponding offshore power cable (8) is inserted into the one end (7a) of the corresponding empty tube (7, 7') at the foundation (4) or housing (3).

11. The method according any of claims 1 to 10, wherein the at least one empty tube is made of plastic, preferably thermoplastics, more preferably polyethylene, even more preferable high-density polyethylene.

## Patentansprüche

1. Verfahren zum Offshore-Verlegen von Stromkabeln (8) für Windenergieanlagen,
- wobei die Stromkabel (8) mithilfe von Leerrohren (7, 7') zwischen mehreren Offshore-Positionen, z.B. zwischen Windturbinenfundamenten und/oder einem Umspannwerk, verlegt werden, wobei mindestens ein Leerrohr (7, 7') im oder auf dem Meeresboden (6) verlegt wird,
- wobei ein Graben (17) im Meeresboden (6) gebildet und mindestens ein Leerrohr (7, 7') in oder auf den Graben (17) gelegt wird,
- wobei das mindestens eine Leerrohr (7, 7') an den Offshore-Positionen (1, 2) oder in deren Nähe abgeschnitten wird und
- wobei nach dem Verlegen der Leerrohre (7, 7') im oder auf dem Meeresboden (6) die Stromkabel (8) in die Leerrohre (7, 7') eingeführt werden.

2. Verfahren nach Anspruch 1, wobei ein zusätzliches Stück Rohr (7, 7') an den Offshore-Positionen (1, 2) vorgesehen wird.

3. Verfahren nach Anspruch 1 oder 2, wobei ein Graben (17) im Meeresboden (6) gebildet und das mindestens eine Leerrohr (7, 7') in den Graben (17) und ein Leerrohr (7, 7') auf den Meeresboden gelegt wird.

4. Verfahren nach einem der Ansprüche 1 bis 3, wobei sich mindestens zwei der Leerrohre (7, 7') auf dem geplanten Verlegungsweg, z.B. in der gemeinsamen Längsrichtung (Z), an den Offshore-Positionen (1, 2) überlappen.

5. Verfahren nach Anspruch 4, wobei die Überlappung mithilfe eines Meeresbodenfahrzeugs oder eines Wasserfahrzeugs bereitgestellt wird, das sich kontinuierlich den geplanten Verlegungsweg entlang bewegt,
- i) Verlegen eines ersten Leerrohrs in einem ersten Zeitraum,
- ii) Verlegen eines zweiten Leerrohrs gleichzeitig mit dem ersten Leerrohr in einem zweiten Zeitraum und
- iii) Stoppen des Verlegens des ersten Leerrohrs und Fortsetzen des Verlegens des zweiten Rohrs in einem dritten Zeitraum.

6. Verfahren nach einem der Ansprüche 1 bis 5, wobei der Graben (17) im Meeresboden (6) aufgefüllt wird, wenn das mindestens eine Leerrohr (7, 7') in den Graben (17) gelegt ist.

7. Verfahren nach einem der Ansprüche 1 bis 6, wobei die Leerrohre (7, 7') aus mindestens zwei Vorräten (18) zugeführt werden.

8. Verfahren nach Anspruch 7, wobei es sich bei den mindestens zwei Vorräten (18) um Rollen mit den darauf aufgerollten Leerrohren (7, 7') handelt.

9. Verfahren nach einem der Ansprüche 1 bis 8, wobei ein Ende (7a) eines entsprechenden Leerrohrs (7, 7') in einem Fundament (4) oder Gehäuse (3) an einer Offshore-Position (1, 2) verlegt wird.

10. Verfahren nach Anspruch 9, wobei ein entsprechendes Offshore-Stromkabel (8) in das eine Ende (7a) des entsprechenden Leerrohrs (7, 7') am Fundament (4) oder Gehäuse (3) eingeführt wird.

11. Verfahren nach einem der Ansprüche 1 bis 10, wobei das mindestens eine Leerrohr aus Kunststoff, vorzugsweise Thermoplasten, besonders bevorzugt Polyethylen, ganz besonders bevorzugt hochdichtem Polyethylen hergestellt ist.

## Revendications

1. Procédé de mise en place en mer de câbles électriques (8) destinés à des installations éoliennes,
- dans lequel les câbles électriques (8) sont mis en place à l'aide de tubes vides (7, 7') entre plusieurs positions en mer, par exemple entre des fondations d'éolienne et/ou un poste électrique, dans lequel au moins un tube vide (7, 7') est mis en place dans ou au-dessus d'un fond marin (6) ;
- dans lequel une tranchée (17) est formée dans le fond marin (6) et au moins un tube vide (7, 7') est déposé dans ou au-dessus de la tranchée (17) ;
- dans lequel le au moins un tube vide (7, 7') est découpé au niveau ou à proximité des positions en mer (1, 2) ; et
- dans lequel les câbles électriques (8) sont insérés dans les tubes vides (7, 7') après mise en place des tubes vides (7, 7') dans le, ou au-dessus du, fond marin (6).

2. Procédé selon la revendication 1, dans lequel une longueur supplémentaire de tube (7, 7') est fournie au niveau des positions en mer (1, 2).

3. Procédé selon la revendication 1 ou 2, dans lequel une tranchée (17) est formée dans le fond marin (6) et le au moins un tube vide (7, 7') est déposé dans la tranchée (17) et un tube vide (7, 7') est déposé au-dessus du fond marin.

4. Procédé selon l'une quelconque des revendications 1 à 3, dans lequel au moins deux des tubes vides (7, 7') se chevauchent sur le trajet de mise en place planifié, par exemple dans une direction longitudinale commune (Z), au niveau des positions en mer (1, 2).

5. Procédé selon la revendication 4, dans lequel le chevauchement est fourni à l'aide d'un véhicule convenant pour le fond marin ou d'un navire se déplaçant de manière continue le long du trajet de mise en place planifié,
- i) mettre en place un premier tube vide pendant une première période,
- ii) mettre en place un deuxième tube vide en même temps que le premier tube vide pendant une deuxième période, et
- iii) arrêter la mise en place du premier tube vide et poursuivre la mise en place du deuxième tube pendant une troisième période.

6. Procédé selon l'une quelconque des revendications 1 à 5, dans lequel la tranchée (17) dans le fond marin (6) est remblayée après que le au moins un tube vide (7, 7') a été déposé dans la tranchée (17).

7. Procédé selon l'une quelconque des revendications 1 à 6, dans lequel les tubes vides (7, 7') sont fournis à partir d'au moins deux dispositifs d'approvisionnement (18).

8. Procédé selon la revendication 7, dans lequel les au moins deux dispositifs d'approvisionnement (18) sont des tourets sur lesquels sont enroulés les tubes vides (7, 7').

9. Procédé selon l'une quelconque des revendications 1 à 8, dans lequel une extrémité (7a) d'un tube vide (7, 7') correspondant est mise en place dans une fondation (4) ou un logement (3) au niveau d'une position en mer (1, 2).

10. Procédé selon la revendication 9, dans lequel un câble électrique marin (8) correspondant est inséré dans ladite une extrémité (7a) du tube vide (7, 7') correspondant au niveau de la fondation (4) ou du logement (3).

11. Procédé selon l'une quelconque des revendications 1 à 10, dans lequel le au moins un tube vide est constitué de plastique, de manière préférée de matières thermoplastiques, de manière plus préférée de polyéthylène, de manière encore plus préférée de polyéthylène haute densité.
